# EUROPEAN PATENT APPLICATION

(11) **EP 2 105 683 A1**
(43) Date of publication of application: **30.09.2009**
(21) Application number: 08102900.1
(22) Date of filing: 25.03.2008
(51) Int. Cl.: F24J 2/38, F24J 2/54

(54) **Solar energy absorption plate with angle adjusting assembly**

(71) Applicant: Ever Advanced Precision Technology Co., Ltd., 824 Kaohsiung County (TW)
(72) Inventor: Yeh, Chia Hao, Yanchao Township Kaohsiung County 824 (TW); Hsieh, Chih Chiang, Yanchao Township Kaohsiung County 824 (TW); Yeh, Chi Cheng, Yanchao Township Kaohsiung County 824 (TW)
(74) Representative: Lang, Christian

(57) **Abstract**

A solar energy absorption plate with an angle adjusting assembly comprises a solar energy plate (1); a first light sensing element (11) and a second light sensing element (12) at two symmetrical opposite sides; a control unit (2) connected to each of the first light sensing element (11) and second light sensing element (12); an angle adjusting unit (13) connected to the control unit (2); and the angle adjusting unit (3) being interactive with the solar energy plate (1). The control unit (2) calculates a brightness difference between a brightness of the first light sensing element (11) and a brightness of the second light sensing element (12) so as to drive the angle adjusting unit (13) to cause that the first and second light sensing element (11, 12) in the solar energy plate (11) have the same brightness and the solar energy plate (1) facing to sun. Furthermore a third and a fourth light sensing elements (13, 14) can be used further.

## Description

### FIELD OF THE INVENTION

The present invention relates to solar energy, and particularly to a solar energy absorption plate with an angle adjusting assembly, wherein a plurality of light sensing elements are installed. By detecting the brightness of the light in these light sensing elements, an angle adjusting unit adjusts the orientation of the solar energy plate so as to cause the solar energy plate to face the sun with a better light receiving efficiency.

### BACKGROUND OF THE INVENTION

Solar energy is plentiful and clean energy without any pollution. No combustion occurs and thus it has no contribution to greenhouse effect. Therefore, solar energy is developed currently.

To increase the efficiency in use of solar energy, the optical-electric conversion effect of a solar energy plate must be increment. In one improvement, a plurality of convex lenses are added at an upper side of a solar energy plate. However this way causes the cost increment and the process is complicated.

In another improvement, the orientation of a solar energy plate is adjusted with the aspect of the sun so as to increase the absorption efficiency of the incident solar energy. This way causes an increment of 66% of solar energy absorption efficiency as comparing with the way that the orientation of solar energy plate is fixed. From the viewpoint of optical electric conversion, this way has been kept attention by the user. There are many ways being disclosed based on this concept.

To adjust the orientation of the solar energy plate with the aspect of the sun, in one method, the orientation of the solar energy plate is controlled based on time. That is, the orientation of the solar energy plate is changed with time. However this method is interfered by whether and the thickness of cloud which are uncertain. Thereby the effect is not apparent.

### SUMMARY OF THE INVENTION

Accordingly, the object of the present invention is to provide a solar energy absorption plate with an angle adjusting assembly, wherein a plurality of light sensing elements are installed. By detecting the brightnesss of the light in these light sensing elements, an angle adjusting unit adjusts the orientation of the solar energy plate so as to cause the solar energy plate to face the sun with a better light receiving efficiency.

To achieve above object, the present invention provides a solar energy absorption plate with an angle adjusting assembly comprising a solar energy plate; a first light sensing element and a second light sensing element at two symmetrical opposite sides; a control unit connected to each of the first light sensing element and second light sensing element; an angle adjusting unit connected to the control unit; and the angle adjusting unit being interactive with the solar energy plate. The control unit calculates a brightness difference between a brightness of the first light sensing element and a brightness of the second light sensing element so as to drive the angle adjusting unit to cause that the first and second light sensing element in the solar energy plate have the same brightness and the solar energy plate facing to sun. Furthermore a third and a fourth light sensing elements can be used further.

The various objects and advantages of the present invention will be more readily understood from the following detailed description when read in conjunction with the appended drawing.

### BRIEF DESCRIPTION OF THE DRAWINGS

Fig. 1 is a perspective view of the present invention.
Fig. 2 is a plane cross sectional view of the present invention.

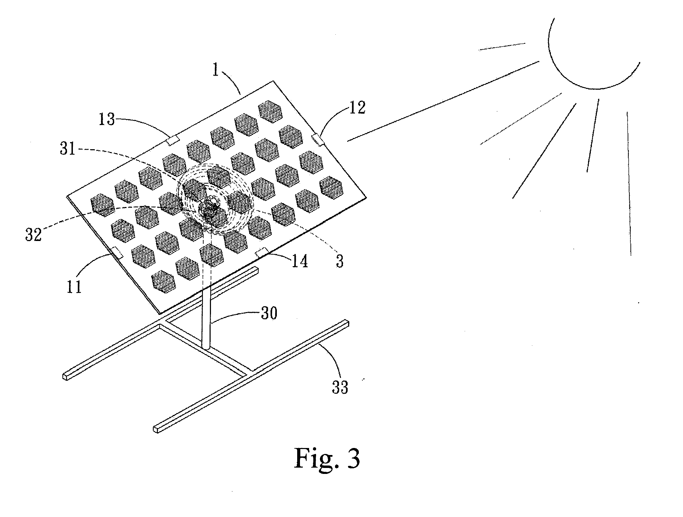

Fig. 3 is a perspective view showing that the orientation of the solar energy plate is adjusted with the aspect of sun.

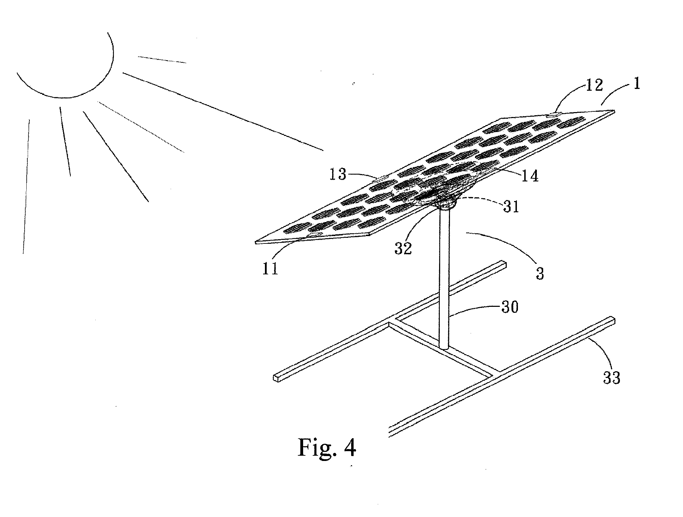

Fig. 4 is a perspective view showing that the orientation of the solar energy plate is adjusted with the aspect of sun.

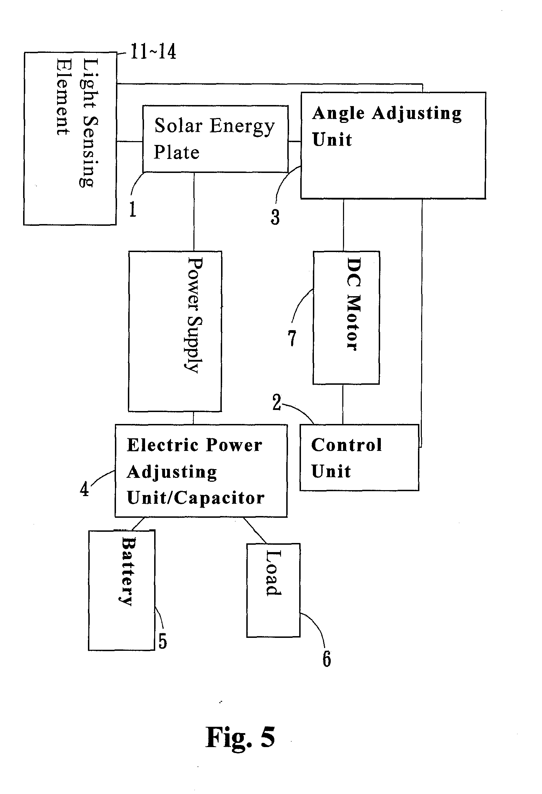

Fig. 5 is a schematic view showing the structure of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

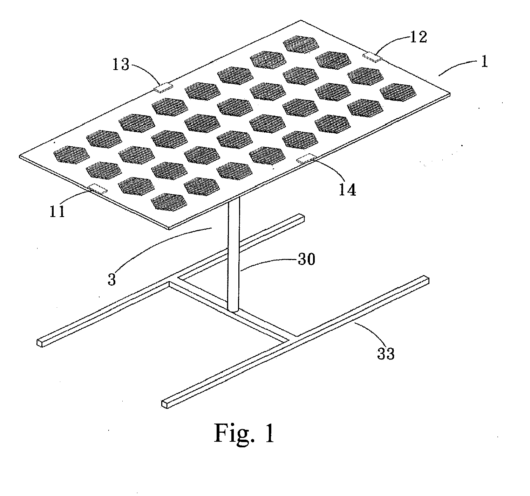

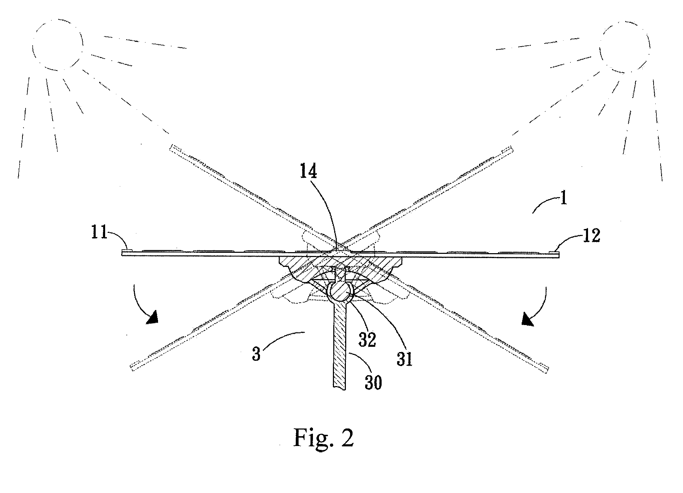

Referring to Figs. 1 and 2, the angle adjuster of the solar cell (or solar battery) of the present invention includes the following elements.

A solar energy plate 1 serves for receiving solar energy and store the power from solar energy. The solar energy plate 1 has a surfaces facing to the sky for receiving sunshine. Two symmetric positions on the solar energy plate 1, such as surfaces or lateral sides (in this embodiment, they are on the surface) are installed with a first light sensing element 11 and a second light sensing element 12, respectively. The light sensing elements may be optical sensitive resistors, or other light receiving elements. Each of the first light sensing element 11 and second light sensing element 12 is connected to a control unit 2. The control unit 2 serves to receive electronic signals converted from the light energy in the first light sensing element 11 and second light sensing element 12 so as to determine the brightness of the light received in the first light sensing element 11 and second light sensing element 12. It should be noted that the brightness serve to determine the illumination to an eye from a light source, namely, the brightness is the light intensity dividing the area of the light source viewed from the viewer. The brightness serves to estimate the simulation of an eye from a light source. The difference between the brightness of the first light sensing element 11 and that of the second light sensing element 12 is varied due to incident angle of the sunshine.

An angle adjusting unit 3 is connected to a control unit 2. The angle adjusting unit 3 includes or is connected to a DC motor 7 for movement.

Therefore, the angle adjusting unit 3 is interacted with the solar energy plate 1. The control unit 2 calculates the brightness of the light received in the first light sensing element 11 and second light sensing element 12. The values of the brightness are converted into electronic signals for driving the angle adjusting unit 3 to cause that the brightness of the first light sensing element 11 and the brightness of second light sensing element 12 are equal and the solar energy plate 1 always faces to sunshine. Namely, when the brightness of the light received in the first light sensing element 11 and second light sensing element 12 are not equal, it illustrates that the solar energy plate 1 do not effectively receive the solar energy and the angle adjusting unit 3 will adjust the orientation of the solar energy plate 1 until the brightness of the light received in the first light sensing element 11 and second light sensing element 12 are equal so that the first light sensing element 11 and second light sensing element 12 face to sunshine.

Furthermore, in the present invention, the angle adjusting unit 3 can be installed at a bottom of the solar energy plate 1. The angle adjusting unit 3 includes an inner ball 31 and an outer bowl 32. The inner ball 31 is connected to a shaft 30. The shaft 30 is connected to a seat 33 for firmly retaining the angle adjusting unit 3. An outer side of the outer bowl 32 is connected to a bottom of the solar energy plate 1 so that outer bowl 32 is rotatable along an outer side of the inner ball 31.

In the present invention, the solar energy plate 1 may be connected to an electric power adjusting unit 4. The electric power adjusting unit 4 may be a capacitor or a circuit with at least one capacitor, or the electric power adjusting unit 4 includes a switch or is connected to a switch so that the power capacity is transferred to the control unit 2 by signals. Or in the present invention, the switch serves to actuate or de-actuate the operation of the present invention. When electric power is saturated, the solar energy plate 1 is shut down, otherwise, the solar energy plate 1 operates continuously. The electric power adjusting unit 4 is connected to a load 5 or a battery set 6, or is connected to both the load 5 and the battery 6 so as to provide sufficient power to the load or output the power for use. Thus, the power state of the battery set 6 is detected for determining the adjustment.

In the present invention, other than the first light sensing element 11 and second light sensing element 12, a third light sensing element 13 and a fourth light sensing element 14 can be added further, which may be at another two opposite sides different from the sides having the free end and second light sensing element 12. Furthermore, the third light sensing element 13 and fourth light sensing element 14 are symmetrical at two opposite sides of the solar energy plate 1. The third light sensing element 13 and fourth light sensing element 14 are connected to the control unit 2. The control unit 2 is connected to the angle adjusting unit 3. The angle adjusting unit 3 is interactive with the solar energy plate 1. By the control unit 2 to calculate the brightness of the third light sensing element 13 and fourth light sensing element 14 and the brightness difference between the brightness of the third light sensing element 13 and the brightness of the fourth light sensing element 14, the angle adjusting unit 3 is driven to cause the third light sensing element 13 and fourth light sensing element 14 of the solar energy plate 1 always has the same brightness; and the solar energy plate 1 faces toward the sun so that more light sensing elements will make the determination precisely.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A solar energy absorption plate with an angle adjusting assembly comprising:
a solar energy plate (1);
a first light sensing element (11) and a second light sensing element (12) at two symmetrical opposite sides;
a control unit (2) being connected to each of the first light sensing element (11) and second light sensing element (12);
an angle adjusting unit (3) connected to the control unit (2); and the angle adjusting unit (3) being interactive with the solar energy plate (1);
wherein the control unit (2) calculates a brightness difference between a brightness of the first light sensing element (11) for light receiving from light source and a brightness of the second light sensing element (12) for light received from the light source so as to drive the angle adjusting unit (3) to cause that the first light sensing element (11) and second light sensing element (12) in the solar energy plate (1) have the same brightness and the solar energy plate (1) facing to sun.

2. The solar energy absorption plate with an angle adjusting assembly as claimed in claim 1, wherein the angle adjusting unit (3) is installed at a lower side of the solar energy plate (1) and includes an inner ball (31) and an outer bowl (32) receiving the inner ball (31); and the inner ball (31) is connected to an axial rod (30); an outer side of the outer bowl (32) is connected to a bottom of the solar energy plate (1) so that the outer bowl (32) is rotatable along an outer side of the inner ball (31).

3. The solar energy absorption plate with an angle adjusting assembly as claimed in claim 1, wherein the solar energy plate (1) is connected to an electric power adjusting unit (4).

4. The solar energy absorption plate with an angle adjusting assembly as claimed in claim 3, wherein the electric power adjusting unit (4) is connected to one of a load (5), a battery (6) and both a load (5) and a battery (6).

5. The solar energy absorption plate with an angle adjusting assembly as claimed in claim 1, further comprising a third light sensing element (13) and a fourth light sensing element (14) at another two symmetrical opposite sides; the third light sensing element (13) and fourth light sensing element (4) are connected to the control unit (2); the control unit (2) calculates a brightness difference between a brightness of the third light sensing element (13) for light receiving from light source and a brightness of the fourth light sensing element (14) for light received from the light source so as to drive the angle adjusting unit (3) to cause that the third light sensing element (13) and fourth light sensing element (14) in the solar energy plate (1) have the same brightness and the solar energy plate (1) facing to sun.
